# EUROPEAN PATENT SPECIFICATION

(11) **EP 2 452 910 B1**
(45) Date of publication and mention of the grant of the patent: **06.01.2016**
(21) Application number: 09847072.7
(22) Date of filing: 08.07.2009
(51) Int. Cl.: B66D 5/08, B66D 5/30

(54) **DIRECT-ACTING DRUM BRAKE DEVICE FOR ELEVATOR**
DIREKT WIRKENDE TROMMELBREMSVORRICHTUNG FÜR EINEN AUFZUG
DISPOSITIF DE FREIN À TAMBOUR À ACTION DIRECTE POUR ASCENSEUR

(43) Date of publication of application: 16.05.2012
(73) Proprietor: Mitsubishi Electric Corporation, Tokyo 100-8310 (JP)
(72) Inventor: HOSHINOO TOMOKAZU, Tokyo 100-8310 (JP)
(74) Representative: Hoffmann Eitle
(86) International application number: PCT/JP2009/062444
(87) International publication number: WO 2011/004468

(56) References cited:
- EP-A1- 1 431 230
- EP-A1- 1 724 225
- WO-A1-2008/087735
- WO-A1-2008/087735
- JP-A- 57 001 180
- JP-A- 2005 029 287
- JP-B2- 3 563 696
- JP-U- S6 086 632
- JP-U- 60 086 632

## Description

### TECHNICAL FIELD

The present invention relates to an elevator hoisting machine, comprising an elevator direct-acting drum braking apparatus that brakes rotation of a brake drum.

### BACKGROUND ART

In conventional elevator hoisting machine braking apparatuses, a brake shoe and a movable core are linked by two parallel linking members. The linking members are disposed in a vicinity of two ends of the brake shoe. A base end of each of the linking members is fixed to the movable core. A tip end of each of the linking members is mounted to the brake shoe so as to have a spherical seat mechanism interposed (see Patent Literature 1, for example).

### CITATION LIST

### PATENT LITERATURE

### [Patent Literature 1]

Japanese Patent Laid-Open No. 2002-284486 (Gazette)

### SUMMARY OF THE INVENTION

### PROBLEM TO BE SOLVED BY THE INVENTION

In conventional braking apparatuses such as that described above, although center misalignment between a lining and the brake drum can be corrected using the spherical seat mechanism, one problem has been that space for disposing the spherical seat mechanism is required in the direction of pressing of the brake shoe.

An elevator hoisting machine according to the preamble of claim 1 is known from WO2008/087735 A.

The present invention aims to solve the above problems and an object of the present invention is to provide an elevator direct-acting drum braking apparatus that can correct center misalignment between a lining and a brake drum while reducing overall size.

### MEANS FOR SOLVING THE PROBLEM

In order to achieve the above object, according to one aspect of the present invention, there is provided an elevator hoisting machine device having the features of claim 1.

### EFFECTS OF THE INVENTION

In an elevator direct-acting drum braking apparatus according to the present invention, because the brake shoe is slidable relative to the movable core within a predetermined range in the direction that is perpendicular to the direction of contact with and separation from the brake drum and perpendicular to the axial direction of the brake drum, and the elastic body that presses and holds the brake shoe against the movable core is disposed on the movable core, center misalignment between the lining and the brake drum can be corrected by the sliding of the brake shoe relative to the movable core. Space in the direction of pressing of the brake shoe is also reduced, enabling overall size to be reduced.

### BRIEF DESCRIPTION OF THE DRAWINGS

Figure 1 is a front elevation that shows an elevator hoisting machine that has an elevator direct-acting drum braking apparatus according to Embodiment 1 of the present invention;
Figure 2 is a front elevation that shows a state of part of a braking apparatus from Figure 1 when not braking;
Figure 3 is a front elevation that shows a state of part of the braking apparatus from Figure 1 when braking; and
Figure 4 is a side elevation that shows an example of an elevator to which the braking apparatus according to Embodiment 1 is applied.

### DESCRIPTION OF EMBODIMENTS

An embodiment for implementing the present invention will now be explained with reference to the drawings.

### Embodiment 1

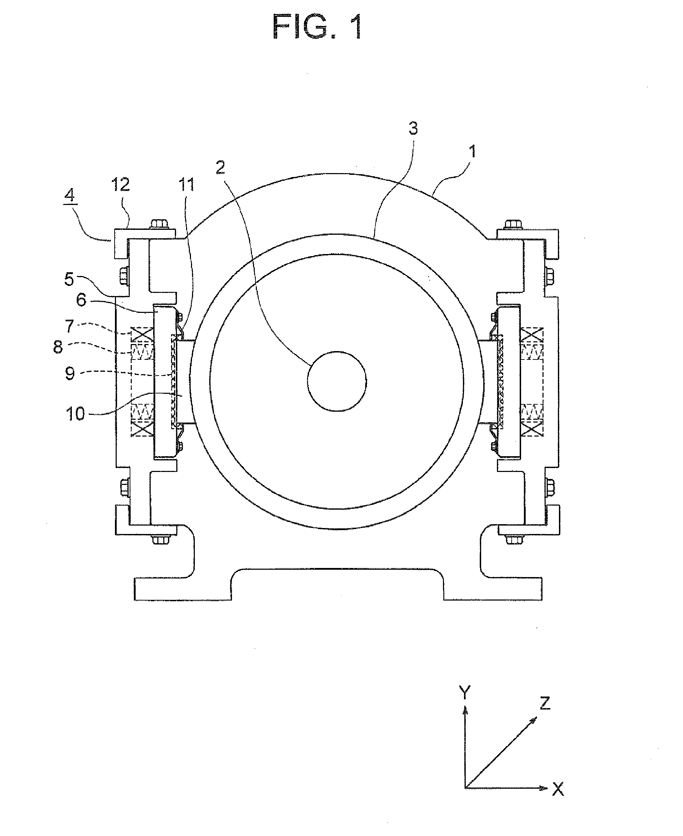

Figure 1 is a front elevation that shows an elevator hoisting machine that has an elevator direct-acting drum braking apparatus according to Embodiment 1 of the present invention.

In the figure, a main shaft (a fixed shaft or a rotating shaft) 2 is disposed on a central portion of a housing 1 of an elevator hoisting machine. A cylindrical brake drum 3 that is rotatable around the main shaft 2 is disposed on the main shaft 2.

A pair of direct-acting drum braking apparatuses 4 (hereinafter simply abbreviated to "braking apparatuses 4") that brake rotation of the brake drum 3, which is a braked portion, are mounted onto two sides of the housing 1. These braking apparatuses 4 are disposed so as to sandwich the brake drum 3 from two sides. In other words, the braking apparatuses 4 are disposed outside the brake drum 3.

The braking apparatuses 4 primarily include a fixed core 5, a movable core 6, a brake coil 7, a brake spring 8, a brake shoe 9, a lining 10, a plurality of leaf springs 11 that function as an elastic body, and a plurality of latches 12.

The fixed core 5 is fixed to the housing 1 by bolts. The movable core 6 is movable in a direction of contact with and separation from the brake drum 3 (X-axis direction in the figure, i.e., horizontal direction). The brake coil 7 is disposed on the fixed core 5, and generates an electromagnetic force that attracts the movable core 6. The brake spring 8 is disposed on the fixed core 5, and forces the movable core 6 toward the brake drum 3.

The brake shoe 9 is mounted to the movable core 6, and is moved in the direction of contact with and separation from the brake drum 3 together with the movable core 6. A surface on an opposite side of the brake shoe 9 from the brake drum 3 contacts the movable core 6. The lining 10 is fixed to the brake shoe 9, and is placed in contact with and separated from an outer circumferential surface of the brake drum 3 (a braked surface) by the movement of the movable core 6.

The movable core 6 is attracted toward the fixed core 5 in opposition to the brake spring 8 by the brake coil 7 being excited, pulling the lining 10 away from the brake drum 3. The braking force from the braking apparatus 4 is thereby released. The movable core 6 is moved toward the brake drum 3 by the spring force from the brake spring 8 by the passage of electric current to the brake coil 7 being interrupted, pressing the lining 10 against the brake drum 3. A braking force is thereby applied to the brake drum 3, the rotation of the brake drum 3 is braked, and the stationary state of the brake drum 3 is held.

Base end portions of the respective leaf springs 11 are fixed to the movable core 6 by bolts. Tip end portions of the respective leaf springs 11 are placed in contact with a surface of the brake shoe 9 on a side near the brake drum 3. The brake shoe 9 is pressed against the movable core 6 and held by the spring forces from the leaf springs 11.

The latches 12, which have L-shaped cross sections, are disposed on the housing 1. The latches 12 come into contact with two upper and lower end surfaces of the fixed core 5. The respective latches 12 are fixed to the housing 1 by bolts.

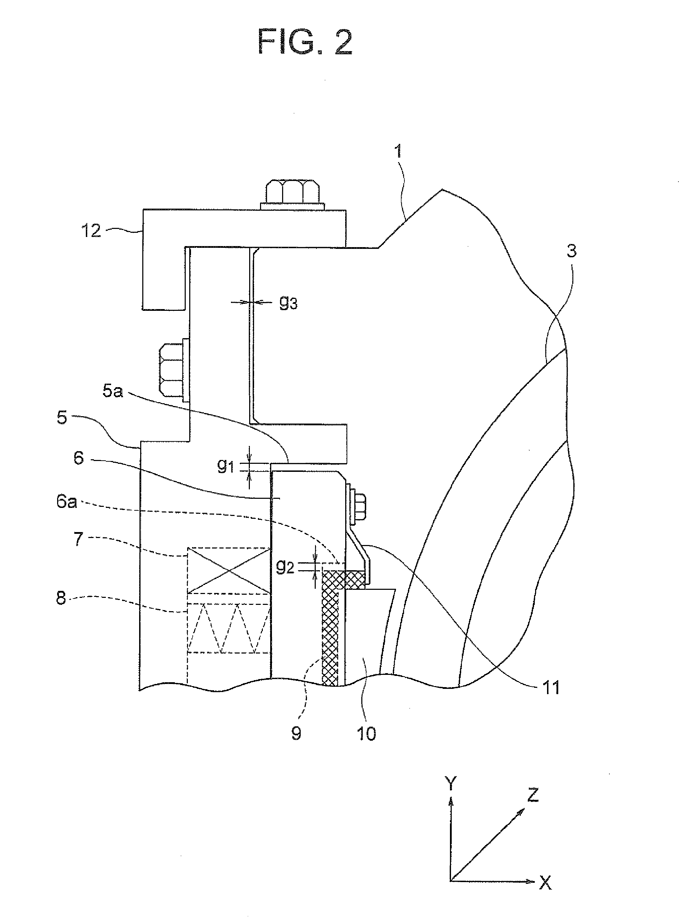

Figure 2 is a front elevation that shows a state of part of a braking apparatus from Figure 1 when not braking. A recess portion 5a that accommodates the movable core 6 is disposed on a side of the fixed core 5 near the brake drum 3. The movable core 6 is displaceable relative to the fixed core 5 within a predetermined range in a direction (Y-axis direction in the figure) that is perpendicular to the direction of contact with and separation from the brake drum 3 (X-axis direction in the figure) and perpendicular to an axial direction of the brake drum 3 (Z-axis direction in the figure), i.e., vertically.

A gap g1 is disposed between an outer peripheral surface of the movable core 6 and an inner peripheral surface of the recess portion 5a. The movable core 6 is thereby displaceable vertically (tangential to a center of a contacting surface between the lining 10 and the brake drum 3) by an amount proportionate to the gap g1.

A shoe groove 6a into which the brake shoe 9 is inserted is disposed on the movable core 6. The brake shoe 9 is slidable vertically inside the shoe groove 6a, parallel to a bottom surface of the shoe groove 6a. In other words, the brake shoe 9 is slideable relative to the movable core 6 within a predetermined range in the direction that is perpendicular to the direction of contact with and separation from the brake drum 3 and perpendicular to the axial direction of the brake drum 3.

A gap g2 is also disposed between an upper and lower end surface of the brake shoe 9 and an inner wall surface of the shoe groove 6a. The brake shoe 9 is thereby vertically displaceable by an amount proportionate to the gap g2. The leaf springs 11 allow displacement of the brake shoe 9 vertically while pressing the brake shoe 9 against the movable core 6.

A gap g3 in the X-axis direction is disposed between the fixed core 5 and the housing 1. This gap g3 is disposed for the purpose of adjusting clearance between the lining 10 and the brake drum 3. The amount of movement of the movable core 6 is set by adjusting the sizes of the gap g3, thereby adjusting the amounts of clearance between the lining 10 and the brake drum 3.

Next, operation will be explained. When not braking, the movable core 6 is attracted to the fixed core 5 by the brake coil 7, separating the lining 10 from the brake drum 3. At this point, the state is such that the gap g1 and the gaps g2 are secured.

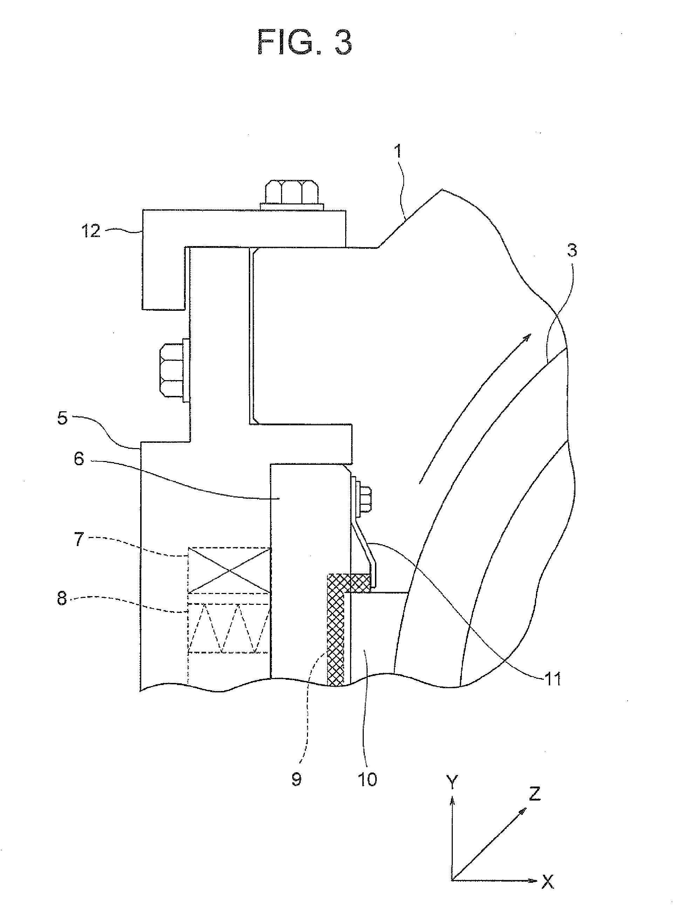

When braking, the passage of electric current to the brake coil 7 is interrupted, and the movable core 6 is pressed against the brake drum 3 by the brake spring 8, pressing the lining 10 against the brake drum 3, as shown in Figure 3. Rotational torque of the brake drum 3 is thereby braked and held.

At that point, a shearing force in the Y-axis direction (a force in a circumferential direction due to the rotational torque) arises in the brake shoe 9. If torque that is greater than or equal to a certain magnitude is further applied, the holding force from the leaf springs 11 is overcome by the shearing force of the brake shoe 9, and the brake shoe 9 moves in the Y-axis direction. Then, if the gap g2 is eliminated, the shearing force is transmitted to the movable core 6. If the movable core 6 moves further in the Y-axis direction due to the shearing force, and the gap g3 is eliminated, the force is transmitted to the fixed core 5, and the torque is held.

In a braking apparatus 4 of this kind, if there is a center misalignment between the lining 10 and the brake drum 3 due to assembly errors, or due to shape errors between the braking surface of the lining 10 and the braked surface of the brake drum 3, etc., the center misalignment is corrected by the brake shoe 9 and the movable core 6 moving from a state in which the gap g1 and the gap g2 exist when not braking within a range of the gap g1 and the gap g2 when the lining 10 is pressed against the brake drum 3. The lining 10 is thereby pressed so as to conform to the braked surface of the brake drum 3, improving reliability of the braking torque.

Since the brake shoe 9 is coupled to the movable core 6 directly, space is not required in the direction of pressing, enabling overall size to be reduced.

In addition, in the unlikely event that the bolts that mount the fixed core 5 to the housing 1 become loose, vertical displacement of the fixed core 5 is restricted by the latches 12, and the rotational torque when braking is borne by the latches 12. Thus, the fixed core 5 can be held more reliably against torque imbalances, enabling reliability to be improved further.

Moreover, in the above example, the brake shoe 9 is disposed inside a shoe groove 6a, but the configuration that restricts the range of movement of the brake shoe 9 is not limited to this, and a protrusion that comes into contact with an end surface of the brake shoe 9 to restrict the movement of the brake shoe 9 may also be disposed on the movable core 6, for example.

In the above example, braking apparatuses 4 are disposed on two sides to the left and right of the brake drum 3, but the braking apparatuses 4 are not limited to particular positions of disposition relative to the brake drum 3.

In addition, the number of braking apparatuses 4 on one brake drum 3 may also be one or three or more.

Furthermore, in the above example, the braking apparatuses 4 are disposed outside the brake drum 3, but may also be disposed inside.

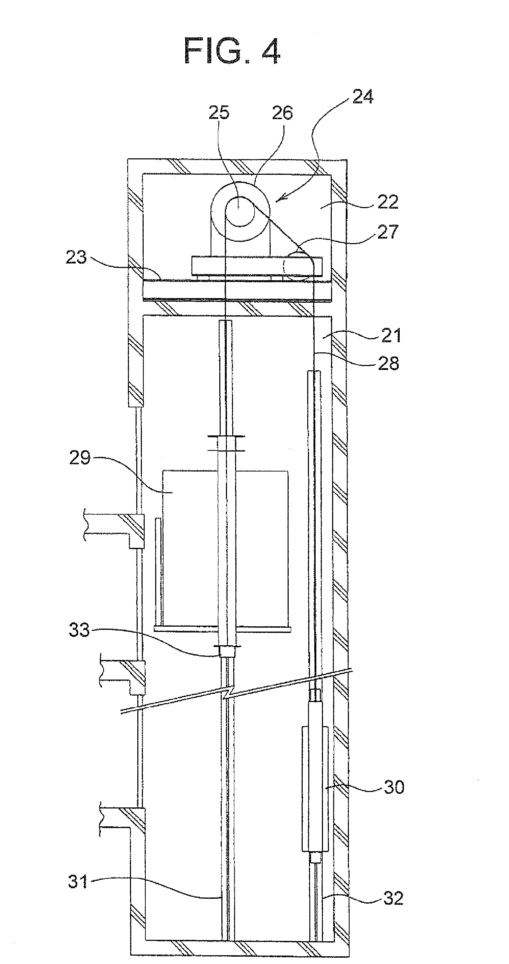

Now, Figure 4 is a side elevation that shows an example of an elevator to which the braking apparatus 4 according to Embodiment 1 is applied. In the figure, a machine room 22 is disposed in an upper portion of a hoistway 21. A machine base 23 is installed inside the machine room 22. An elevator hoisting machine 24 is supported on the machine base 23. The elevator hoisting machine 24 has a driving sheave 25 and a hoisting machine main body 26.

The hoisting machine main body 26 has: a hoisting machine motor that rotates the driving sheave 25; and a braking apparatus 4 (Figure 1) that brakes the rotation of the driving sheave 25. The brake drum 3 according to Embodiment 1 is rotated together with the driving sheave 25.

A deflecting sheave 27 is mounted to the machine base 23. A plurality of elevator ropes 28 that function as a suspending means are wound around the driving sheave 25 and the deflecting sheave 27.

A car 29 is suspended on first end portions of the elevator ropes 28. Specifically, the car 29 is suspended inside the hoistway 21 by the elevator ropes 28 on a first side of the driving sheave 25. A counterweight 30 is suspended on second end portions of the elevator ropes 28. Specifically, the counterweight 30 is suspended by the elevator ropes 28 on a second side of the driving sheave 25.

A pair of car guide rails 31 that guide raising and lowering of the car 29 and a pair of counterweight guide rails 32 that guide raising and lowering of the counterweight 30 are installed inside the hoistway 21. Emergency stopper apparatuses 33 that make the car 29 perform an emergency stop by engaging with the car guide rail 31 are mounted to the car 29.

Moreover, the type of elevator to which the direct-acting drum braking apparatus according to the present invention is applied is not limited to the type in Figure 4. For example, the present invention can also be applied to machine-roomless elevators, elevators that use two-to-one (2:1) roping methods, multi-car elevators, or double-deck elevators.

## Claims

1. An elevator hoisting machine comprising an elevator direct-acting drum braking apparatus and a housing (1), the apparatus comprising: a fixed core (5) that is disposed on the housing (1);
a movable core (6) that can move in a direction of contact with and separation from a brake drum (3);
a brake coil (7) that is disposed on the fixed core (5), and that generates an electromagnetic force that attracts the movable core (6);
a brake spring (8) that is disposed on the fixed core (5), and that forces the movable core (6) toward the brake drum (3);
a brake shoe (9) that is mounted to the movable core (6); and
a lining (10) that is disposed on the brake shoe (9), and that is placed in contact with and separated from the brake drum (3) by movement of the movable core (6),
**characterized in that**
the brake shoe (9) is slidable relative to the movable core (6) within a predetermined range in a direction that is perpendicular to the direction of contact with and separation from the brake drum (3) and perpendicular to an axial direction of the brake drum (3); and
an elastic body (11) that presses and holds the brake shoe (9) against the movable core (6) is disposed on the movable core (6).

2. A hoisting machine according to Claim 1, wherein:
a shoe groove (5a) into which the brake shoe (9) is inserted is disposed on the movable core (6); and
the brake shoe (9) is slidable inside the shoe groove (5a) parallel to a bottom surface of the shoe groove (5a).

3. A hoisting machine according to Claim 1 or 2, wherein the movable core (6) is displaceable relative to the fixed core (5) within a predetermined range in the direction that is perpendicular to the direction of contact with and separation from the brake drum (3) and perpendicular to the axial direction of the brake drum (3).

4. A hoisting machine according to one of the preceding claims, wherein a latch (12) that comes into contact with an end surface of the fixed core (5) to restrict displacement of the fixed core (5) in the direction that is perpendicular to the direction of contact with and separation from the brake drum (3) and perpendicular to the axial direction of the brake drum (3) is disposed on the housing (1).

## Patentansprüche

1. Aufzugsfördereinrichtung, die eine direkt-wirkende Aufzugstrommelbremsenvorrichtung und ein Gehäuse (1) aufweist, wobei die Vorrichtung aufweist:
ein fixiertes Innenteil (5), das an dem Gehäuse (1) vorgesehen ist;
ein bewegliches Innenteil (6), das sich in Kontaktrichtung mit und in Vereinzelungsrichtung von der Trommelbremse (3) bewegen kann;
eine Bremsspule (7), die an dem fixierten Innenteil (5) vorgesehen ist, und die eine elektromagnetische Kraft generiert, die das bewegliche Innenteil (6) anzieht;
eine Bremsfeder (8), die an dem fixierten Innenteil (5) vorgesehen ist, und die das bewegliche Innenteil (6) in Richtung der Trommelbremse (3) treibt;
einen Bremsschuh (9), der an dem beweglichen Innenteil (6) befestigt ist; und
einen Belag (10), der an dem Bremsschuh (9) vorgesehen ist, und der durch das Bewegen des beweglichen Innenteils (6) in Kontakt mit und in Vereinzelung von der Bremstrommel (3) gebracht wird;
**dadurch gekennzeichnet, dass**
der Bremsschuh (9) relativ zum beweglichen Innenteil (6) innerhalb eines vorgegebenen Bereichs in einer Richtung, die senkrecht zu der Kontaktrichtung mit und der Vereinzelungsrichtung von der Trommelbremse (3) und senkrecht zu einer axialen Richtung der Trommelbremse ist, verschiebbar ist; und
ein flexibler Körper (11), der den Bremsschuh (9) gegen das bewegliche Innenteil (6) presst und hält, an dem beweglichen Innenteil (6) vorgesehen ist.

2. Fördereinrichtung nach Anspruch 1, wobei:
eine Schuhnut (5a), in die der Bremsschuh (9) eingesetzt ist, an dem beweglichen Innenteil (6) vorgesehen ist; und
der Bremsschuh (9) in der Schuhnut (5a) parallel zu einer Bodenfläche der Schuhnut (5a) verschiebbar ist.

3. Fördereinrichtung nach Anspruch 1 oder 2, wobei das bewegliche Innenteil (6) relativ zu dem fixierten Innenteil (5), innerhalb eines vorgegebenen Bereichs in der Richtung, die senkrecht zu der Kontaktrichtung mit und der Vereinzelungsrichtung von der Bremstrommel (3) und senkrecht zu einer axialen Richtung der Bremstrommel (3) ist, verschiebbar ist.

4. Fördereinrichtung nach einem der vorangehenden Ansprüche, wobei eine Sperre (12) an dem Gehäuse (1) vorgesehen ist, die in Kontakt mit einer Endfläche des fixierten Innenteils (5) kommt, sodass die Verschiebung des fixierten Innenteils (5) in der Richtung, die senkrecht zu der Kontaktrichtung mit und der Vereinzelungsrichtung von der Trommelbremse (3) und senkrecht zu der axialen Richtung der Trommelbremse (3) ist, begrenzt ist.

## Revendications

1. Machine de levage pour ascenseur comprenant un appareil de frein à tambour à action directe pour ascenseur et un boîtier (1), l'appareil comprenant : un noyau fixe (5) qui est disposé sur le boîtier (1) ;
un noyau mobile (6) qui peut se déplacer dans une direction de contact avec un frein à tambour (3) et de séparation de celui-ci ;
une bobine de frein (7) qui est disposée sur le noyau fixe (5), et qui génère une force électromagnétique qui attire le noyau mobile (6) ;
un ressort de frein (8) qui est disposé sur le noyau fixe (5), et qui force le noyau mobile (6) à se déplacer vers le tambour de frein (3) ;
un patin de frein (9) qui est monté sur le noyau mobile (6) ; et
un revêtement (10) qui est disposé sur le patin de frein (9), et qui est placé en contact avec le frein à tambour (3) et séparé de celui-ci par déplacement du noyau mobile (6),
**caractérisée en ce que**
le patin de frein (9) peut coulisser par rapport au noyau mobile (6) dans un intervalle prédéterminé dans une direction qui est perpendiculaire à la direction de contact avec le frein à tambour (3) et de séparation de celui-ci et perpendiculaire à une direction axiale du frein à tambour (3) ; et
un corps élastique (11) qui presse et maintient le patin de frein (9) contre le noyau mobile (6) est disposé sur le noyau mobile (6).

2. Machine de levage selon la revendication 1, dans laquelle :
une rainure de patin (5a) dans laquelle le patin de frein (9) est inséré est disposée sur le noyau mobile (6) ; et
le patin de frein (9) peut coulisser à l'intérieur de la rainure de patin (5a) parallèlement à une surface inférieure de la rainure de patin (5a).

3. Machine de levage selon la revendication 1 ou 2, dans laquelle le noyau mobile (6) peut être déplacé par rapport au noyau fixe (5) dans un intervalle prédéterminé dans la direction qui est perpendiculaire à la direction de contact avec le frein à tambour (3) et de séparation de celui-ci et perpendiculaire à la direction axiale du frein à tambour (3).

4. Machine de levage selon l'une des revendications précédentes, dans laquelle un verrou (12) qui vient en contact avec une surface d'extrémité du noyau fixe (5) pour limiter le déplacement du noyau fixe (5) dans la direction qui est perpendiculaire à la direction de contact avec le frein à tambour (3) et de séparation de celui-ci et perpendiculaire à la direction axiale du frein à tambour (3) est disposé sur le boîtier (1).
